# EUROPÄISCHE PATENTSCHRIFT

(11) **EP 2 277 029 B1**
(45) Veröffentlichungstag und Bekanntmachung des Hinweises auf die Patenterteilung: **06.12.2017**
(21) Anmeldenummer: 09737855.8
(22) Anmeldetag: 25.04.2009
(51) Int. Cl.: G01N 21/64, G02B 21/36, G02B 21/16, G02B 27/58

(54) **AUFLÖSUNGSGESTEIGERTE LUMINESZENZMIKROSKOPIE**
RESOLUTION-ENHANCED LUMINESCENCE MICROSCOPY
MICROSCOPIE À LUMINESCENCE À RÉSOLUTION AMÉLIORÉE

(30) Priorität: 30.04.2008 DE 102008021641
(43) Veröffentlichungstag der Anmeldung: 26.01.2011
(73) Patentinhaber: Carl Zeiss Microscopy GmbH, 07745 Jena (DE)
(72) Erfinder: WOLLESCHENSKY, Ralf, 07743 Jena (DE)
(74) Vertreter: Hampe, Holger
(86) Internationale Anmeldenummer: PCT/EP2009/003036
(87) Internationale Veröffentlichungsnummer: WO 2009/132811

(56) Entgegenhaltungen:
- EP-A1- 2 356 505
- EP-A2- 1 598 688
- WO-A1-2010/060545
- HESS S T ET AL: "Ultra-high resolution imaging by fluorescence photoactivation localization microscopy" BIOPHYSICAL JOURNAL, NEW YORK, US, US, Bd. 91, Nr. 11, 1. Dezember 2006 (2006-12-01), Seiten 4258-4272, XP008082813 ISSN: 0006-3495
- HESS S T ET AL: "Dynamic clustered distribution of hemagglutinin resolved at 40 nm in living cell membranes discriminates between raft theories" PROCEEDINGS OF THE NATIONAL ACADEMY OF SCIENCES OF THE UNITED STATES OF AMERICA NATIONAL ACADEMY OF SCIENCES USA, Bd. 104, Nr. 44, 30. Oktober 2007 (2007-10-30), Seiten 17370-17375, XP002540126 ISSN: 0027-8424
- SHROFF H ET AL: "Dual-color superresolution imaging of genetically expressed probes within individual adhesion complexes" PROCEEDINGS OF THE NATIONAL ACADEMY OF SCIENCES OF THE UNITED STATES OF AMERICA NATIONAL ACADEMY OF SCIENCES USA, Bd. 104, Nr. 51, 18. Dezember 2007 (2007-12-18), Seiten 20308-20313, XP002540127 ISSN: 0027-8424
- SHROFF H ET AL: "Live-cell photoactivated localization microscopy of nanoscale adhesion dynamics" NATURE METHODS, NATURE PUBLISHING GROUP, GB, [Online] Bd. 5, Nr. 5, 1. Mai 2008 (2008-05-01), Seiten 417-423, XP008108382 ISSN: 1548-7091 [gefunden am 2008-04-13]
- BETZIG E ET AL: "Imaging intracellular fluorescent proteins at nanometer resolution" SCIENCE AMERICAN ASSOC. ADV. SCI USA, Bd. 313, Nr. 5793, 15. September 2006 (2006-09-15), Seiten 1642-1645, XP002540128 ISSN: 0036-8075

## Beschreibung

Die Erfindung bezieht sich auf ein Verfahren zur räumlich hochauflösenden Lumineszenzmikroskopie einer Probe, die mit Markierungsmolekülen markiert ist, welche mit einem Umschaltsignal aktivierbar sind, so daß sie erst dann zur Abgabe von bestimmter Lumineszenzstrahlung anregbar sind, wobei das Verfahren folgende Schritte aufweist:
a) Einbringen des Umschaltsignals auf die Probe derart, daß nur eine Teilmenge der in der Probe vorhandenen Markierungsmoleküle aktiviert werden, wobei in der Probe Teilbereiche bestehen, in denen aktivierte Moleküle zu den ihnen nächst benachbarten aktivierten Markierungsmolekülen einen Abstand haben, der größer oder gleich einer optischen Auflösung einer Detektion von Lumineszenzstrahlung ist,
b) Anregen der aktivierten Moleküle zur Abgabe von Lumineszenzstrahlung,
c) Detektion der Lumineszenzstrahlung mit der begrenzten Auflösung und
d) Erzeugen von Bilddaten aus der in Schritt c) aufgenommenen Lumineszenzstrahlung,
wobei die die geometrischen Orte der Lumineszenzstrahlung abgebenden Markierungsmoleküle mit einer über die Auflösungsgrenze gesteigerten Ortsauflösung angeben.

Die Erfindung bezieht sich weiter auf eine Vorrichtung zur räumlich hochauflösenden Fluoreszenzmikroskopie einer Probe, die mit Markierungsmolekülen markiert ist, welche mit einem Umschaltsignal aktivierbar sind, so daß sie erst dann zur Abgabe von bestimmter Lumineszenzstrahlung anregbar sind, wobei die Vorrichtung aufweist: Mittel zum Einbringen des Umschaltsignals auf die Probe derart, daß nur eine Teilmenge der in der Probe vorhandenen Markierungsmoleküle aktiviert werden, wobei in der Probe Teilbereiche bestehen, in denen aktivierte Moleküle zu den ihnen nächst benachbarten aktivierten Markierungsmolekülen einen Abstand haben, der größer oder gleich einer optischen Auflösung einer Detektion von Lumineszenzstrahlung ist, Mittel zum Anregen der aktivierten Moleküle zur Abgabe *von* Lumineszenzstrahlung, eine Detektoreinrichtung, die Lumineszenzstrahlung mit der begrenzten Auflösung aufnimmt und ein ortsaufgelöstes Detektionssignal abgibt, eine Bilddatenerzeugungseinrichtung, die aus dem Detektionssignal Bilddaten erzeugt, welche die geometrischen Orte der Lumineszenzstrahlung abgebenden Markierungsmoleküle mit einer über die Auflösungsgrenze gesteigerten Ortsauflösung angeben

Ein klassisches Anwendungsgebiet der Lichtmikroskopie zur Untersuchung von biologischen Präparaten ist die Lumineszenzmikroskopie. Hierbei werden bestimmte Farbstoffe (sogenannte Phosphore oder Fluorophore) zur spezifischen Markierung von Proben, z.B. von Zellteilen, verwendet. Die Probe wird, wie erwähnt, mit Anregungsstrahlung beleuchtet und das dadurch angeregte Lumineszenzlicht mit geeigneten Detektoren erfaßt. Üblicherweise ist dazu im Lichtmikroskop ein dichroitischer Strahlteiler in Kombination mit Blockfiltern vorgesehen, die die Fluoreszenzstrahlung von der Anregungsstrahlung abspalten und eine getrennte Beobachtung ermöglichen. Durch dieses Vorgehen ist die Darstellung einzelner, verschieden gefärbter Zellteile im Lichtmikroskop möglich. Natürlich können auch mehrere Teile eines Präparates gleichzeitig mit verschiedenen, sich spezifisch an unterschiedliche Strukturen des Präparates anlagernden Farbstoffen eingefärbt werden. Dieses Verfahren bezeichnet man als Mehrfachlumineszenz. Auch kann man Proben vermessen, die per se, also ohne Farbstoffzugabe lumineszieren.

Lumineszenz wird hier, wie allgemein üblich, als Oberbegriff für Phosphoreszenz und Fluoreszenz verstanden, erfaßt also beide Prozesse.

Weiter ist es zur Probenuntersuchung bekannt, Laser-Scanning-Mikroskope (auch LSM abgekürzt) zu verwenden, die aus einem dreidimensional ausgeleuchteten Bild mittels einer konfokalen Detektionsanordnung (dann spricht man von einem konfokalen LSM) oder einer nichtlinearen Probenwechselwirkung (sogenannte Multiphotonenmikroskopie) nur diejenige Ebene wiedergeben, die sich in der Fokusebene des Objektives befindet. Es wird ein optischer Schnitt gewonnen, und die Aufzeichnung mehrerer optischer Schnitte in verschiedenen Tiefen der Probe erlaubt es anschließend, mit Hilfe eines geeigneten Datenverarbeitungsgerätes ein dreidimensionales Bild der Probe zu generieren, das aus den verschiedenen optischen Schnitten zusammengesetzt ist. Die Laser-Scanning-Mikroskopie ist somit zur Untersuchung von dicken Präparaten geeignet.

Natürlich wird auch eine Kombination von Lumineszenzmikroskopie und Laser-Scanning-Mikroskopie verwendet, bei der eine lumineszierende Probe in verschiedenen Tiefenebenen mit Hilfe eines LSM abgebildet wird.

Prinzipiell ist die optische Auflösung eines Lichtmikroskopes, auch eines LSM, durch die physikalischen Gesetze beugungsbegrenzt. Zur optimalen Auflösung innerhalb dieser Grenzen sind spezielle Beleuchtungskonfigurationen bekannt, wie beispielsweise 4Pi-Anordnung oder Anordnungen mit Stehwellenfeldern. Damit kann die Auflösung, insbesondere in axialer Richtung gegenüber einem klassischen LSM deutlich verbessert werden. Mit Hilfe nicht-linearer Entvölkerungsprozesse kann weiter die Auflösung auf einen Faktor von bis zu 10 gegenüber einem beugungsbegrenzten konfokalen LSM angehoben werden. Ein solches Verfahren ist beispielsweise in der US 5866911 beschrieben. Für die Entvölkerungsprozesse sind verschiedene Ansätze bekannt, beispielsweise wie in der DE 4416558 C2, US 6633432 oder DE 10325460 A1 beschrieben.

Ein weiteres Verfahren zur Auflösungssteigerung wird in der EP 1157297 B1 angesprochen. Dort sollen mittels strukturierter Beleuchtung nichtlineare Prozesse ausgenützt werden. Als Nichtlinearität erwähnt die Druckschrift dabei die Sättigung der Fluoreszenz. Das geschilderte Verfahren nimmt in Anspruch, durch eine strukturierte Beleuchtung eine Verschiebung des Objektraumspektrums relativ zur Übertragungsfunktion des optischen Systems zu realisieren. Konkret bedeutet die Verschiebung des Spektrums, daß Objektraumfrequenzen V0 bei einer Raumfrequenz V0 - Vm, wobei Vm die Frequenz der strukturierten Beleuchtung ist, übertragen werden. Bei gegebener durch das System maximal übertragbarer Raumfrequenz ermöglicht dies den Transfer von um die Verschiebefrequenz Vm über der maximalen Frequenz der Übertragungsfunktion liegender Raumfrequenzen des Objektes. Dieser Ansatz erfordert einen Rekonstruktionsalgorithmus zur Bilderzeugung und die Verwertung mehrerer Aufnahmen für ein Bild. Auch ist bei diesem Verfahren als nachteilig anzusehen, daß die Probe in Bereichen außerhalb des detektierten Fokus unnötig mit Strahlung belastet wird, da die notwendige strukturierte Beleuchtung das gesamte Probenvolumen durchsetzt. Im übrigen kann dieses Verfahren derzeit bei dicken Proben nicht verwendet werden, da außerfokal angeregte Fluoreszenz als Untergrundsignal mit auf den Detektor gelangt und somit den Dynamikbereich der nachgewiesenen Strahlung drastisch reduziert.

Ein Verfahren, das unabhängig von der Laserscanningmikroskopie eine Auflösung jenseits der Beugungsgrenze erreicht ist schließlich auch aus der WO 2006127692 und der DE 102006021317 bekannt. Dieses mit PALM abgekürzte Verfahren (Photo Activated Light Microscopy) verwendet eine Markierungssubstanz, welche mittels eines optischen Aktivierungssignals aktiviert werden kann, so daß sie nur im aktivierten Zustand mit Anregungsstrahlung zur Abgabe von bestimmter Fluoreszenzstrahlung angeregt werden kann. Nicht aktivierte Moleküle der Markierungssubstanz senden auch nach Einstrahlung von Anregungsstrahlung keine oder zumindest keine merkliche Fluoreszenzstrahlung ab. Im PALM-Verfahren wird nun das Aktivierungssignal so aufgebracht, daß die dadurch aktivierten Markierungsmoleküle von benachbarten aktivierten Molekülen so beabstandet sind, daß sie gemessen an der optischen Auflösung der Mikroskopie getrennt oder nachträglich trennbar sind. Die aktivierten Moleküle werden also zumindest weitgehend isoliert. Für diese isolierten Moleküle wird dann das Zentrum deren auflösungsbegrenzt bedingten Strahlungsverteilung ermittelt und daraus rechnerisch die Lage der Moleküle mit höherer Genauigkeit bestimmt, als es die optische Abbildung eigentlich zuläßt. Diese gesteigerte Auflösung durch rechnerische Schwerpunktbestimmung der Beugungsverteilung wird in der englischen Fachliteratur auch als "superresolution" bezeichnet. Sie erfordert, daß in der Probe zumindest einige der aktivierten Markierungsmoleküle mit der optischen Auflösung mit der die Lumineszenzstrahlung detektiert wird, unterscheidbar, also isoliert sind. Dann kann für solche Moleküle die Ortsangabe mit gesteigerter Auflösung erreicht werden.

Zum Isolieren einzelner Markierungsmoleküle nutzt das PALM-Verfahren die Tatsache, daß die Wahrscheinlichkeit, mit der ein Markierungsmolekül nach Empfang eines Photons der Aktivierungsstrahlung aktiviert wird, für alle Moleküle gleich ist. Über die Intensität der Umschaltstrahlung und damit die Zahl der Photonen, die auf eine Flächeneinheit der Probe fällt, kann also dafür gesorgt werden, daß die Wahrscheinlichkeit, in einem Flächenbereich der Probe vorhandene Markierungsmoleküle zu aktivieren, so gering ist, daß es ausreichend Bereiche gibt, in denen innerhalb der optischen Auflösung nur unterscheidbare Markierungsmoleküle Fluoreszenzstrahlung emittieren. Durch passende Wahl der Intensität, d.h. der Photonendichte der Umschaltstrahlung, wird erreicht, daß möglichst nur die bezogen auf die optische Auflösung isoliert liegende Markierungsmoleküle aktiviert werden und nachfolgend Fluoreszenzstrahlung aussenden. Für diese isolierten Moleküle wird dann rechnerisch der Schwerpunkt der beugungsbedingten Intensitätsverteilung und damit die Lage des Markierungsmoleküls mit gesteigerter Auflösung ermittelt. Zur Abbildung der gesamten Probe wird die Isolierung der Markierungsmoleküle der Teilmenge durch Einbringen der Aktivierungsstrahlung, nachfolgende Anregung und Fluoreszenzstrahlungsabbildung so lange wiederholt, bis möglichst alle Markierungsmoleküle einmal in einer Teilmenge enthalten und innerhalb des Auflösung der Abbildung isoliert waren.

Das PALM-Verfahren hat dabei den Vorteil, daß weder für die Aktivierung, noch die für Anregung eine hohe Ortsauflösung benötigt wird. Statt dessen kann sowohl die Aktivierung als auch die Anregung in Weitfeldbeleuchtung erfolgen.

Im Ergebnis werden die Markierungsmoleküle durch geeignete Wahl der Intensität der Aktivierungsstrahlung statistisch in Teilmengen aktiviert. Deshalb muß für die Generierung eines Gesamtbildes einer Probe, in dem die Positionen aller Markierungsmoleküle rechnerisch mit z.B. jenseits der Beugungsgrenze liegender Auflösung bestimmt werden können, eine Vielzahl von Einzelbildern ausgewertet werden. Es können bis zu 10.000 Einzelbilder sein. Dies hat zur Folge, daß große Datenmengen verarbeitet werden, und die Messung entsprechend lange dauert. Schon die Aufnahme eines Gesamtbildes erfordert mehrere Minuten, was im wesentlichen durch die Ausleserate der verwendeten Kamera festgelegt ist. Die Positionsbestimmung der Moleküle in den Einzelbildern erfolgt durch aufwendige rechnerische Prozeduren, wie sie beispielsweise in Egner et al., Biophysical Journal, S. 3285-3290, Band 93, November 2007, beschrieben ist. Die Bearbeitung aller Einzelbilder und das Zusammensetzen zu einem hochaufgelösten Gesamtbild, also ein Bild, in dem die Orte der Markierungsmoleküle mit einer jenseits der Beugungsgrenze liegenden Auflösung angegeben sind, dauert typischerweise vier Stunden.

Der Erfindung liegt die Aufgabe zugrunde, ein Verfahren bzw. eine Vorrichtung zur PAL-Mikroskopie so weiterzubilden, daß eine schnellere Bildgewinnung erreicht ist.

Diese Aufgabe wird durch ein Verfahren der eingangs genannten Art gelöst, bei dem die Detektion der Lumineszenzstrahlung in Schritt c) oder die Erzeugung der Bilddaten in Schritt d) eine nichtlineare, höhere Amplituden überproportional berücksichtigende Verstärkung aufgenommener Lumineszenzstrahlung umfaßt, um die Ortsauflösung über die optische Auflösung zu schärfen und die Schritte a)-e) mehrfach durchlaufen werden, um ein Gesamtbild der Probe zu erzeugen, wobei jeweils Einzelbilder erzeugt werden, wobei nach Schritt e) erhaltene Bilddaten der Einzelbilder jeweils mit Bilddaten aus vorherigen Durchläufen zum Gesamtbild überlagert werden, so dass nach dem letzten Durchlauf das Gesamtbild fertiggestellt ist. Die Aufgabe wird weiter gelöst durch eine Vorrichtung der genannten Art, bei der ein nichtlinearer Verstärker vorgesehen ist, der aufgenommene Lumineszenzstrahlung oder das Detektionssignal nichtlinear, höhere Amplituden überproportional berücksichtigend verstärkt, um die Ortsauflösung über die optische Auflösung zu schärfen, wobei die Bilddatenerzeugungseinrichtung ausgebildet ist um Einzelbilder zu erzeugen und Einzelbilder mit Bilddaten aus vorherigen Durchläufen zu einem Gesamtbild zu überlagern, so dass nach einem letzten Durchlauf das Gesamtbild fertiggestellt ist. Unter Schärfung der Auflösung ist dabei zu verstehen, daß die Orte der lumineszierenden Markierungsmolekül mit einer geringen Unschärfe bekannt sind, als es die optische Auflösung ermöglicht. Die Punktverwaschungsfunktion hat also eine geringere Halbwertsbreite.

Die Erfindung setzt also im PALM-Prinzip anstelle einer aufwendigen rechnerischen Schwerpunktsbestimmung der isolierten aktivierten Markierungsmoleküle eine geeignete nichtlineare Verstärkung ein, wobei, wie noch erläutert werden wird, die nichtlineare Verstärkung an verschiedenen Stellen der Gesamtbildgewinnung eingesetzt werden kann. Die nichtlineare Verstärkung bevorzugt höhere Intensitäten in der aufgenommenen Lumineszenzstrahlung überproportional. Diese Bevorzugung kann zum einen dadurch erreicht werden, daß höhere Intensitäten überproportional gegenüber niedrigeren Intensitäten verstärkt werden, der Verstärkungsfaktor also mit ansteigender Intensität zunimmt. Zum anderen kann die Bevorzugung auch dadurch erreicht werden, daß geringere Intensitäten überproportional gedämpft werden. Unter dem Begriff der nichtlinearen Verstärkung wird deshalb im Sinne dieser Erfindung sowohl eine Verstärkung, welche mit steigender Amplitude des zu verstärkenden Signals zunimmt, als auch eine nichtlineare Dämpfung verstanden, welche mit steigender Amplitude des zu verstärkenden Signals abnimmt.

Die erfindungsgemäße Vereinfachung bringt allerdings eine gesteigerte Anforderung hinsichtlich der Trennung der aktivierten Markierungsmoleküle mit sich. Während das bisher verfolgte PALM-Prinzip durch eine rechnerische Analyse der Intensitätsverteilung auch noch lumineszierende Markierungsmoleküle trennen konnte, die optisch nicht getrennt wurden (indem z. B. eine Abweichung der örtlichen Verteilung der Lumineszenzintensität von einer gauß'schen Verteilung dazu verwendet wurde, mehrere lumineszierende Markierungsmoleküle in der Verteilung zu erkennen und zu lokalisieren), benötigt der erfindungsgemäße Ansatz eine, wenn auch schwache, Trennung der lumineszierenden Markierungsmoleküle, damit die nichtlineare Verstärkung eine Auflösungsschärfung bewirken kann. Dies drückt auch der Begriff "schärfen" aus, da man schon logisch nur eine vorhandene Auflösung also Unterscheidung zweier lumineszierender Moleküle schärfen kann, die zuvor schon vorhanden ist. Für dieses Schärfen bedarf die Erfindung zumindest eines Sattels, d. h. lokalen Minimums, in der örtlichen Verteilung der Lumineszenzintensität benachbarter Markierungsmoleküle. Der Erfindung liegt die neue Erkenntnis zugrunde, daß sich dieses Erfordernis vergleichsweise leicht durch ein geeignetes Umschaltsignal erfüllen läßt und daß sich dadurch eine beachtliche Vereinfachung und Beschleunigung der Bilderzeugung einstellt.

Es erfolgt also erfindungsgemäß keine aufwendige Positionsbestimmung der aktivierten, isolierten und durch ihre Fluoreszenzstrahlung detektierten Moleküle. Hierdurch können die Einzelbilder besonders schnell zu einem hochaufgelösten Bild prozessiert werden. Außerdem ist es möglich, schon während der Aufnahme die Einzelbilder entsprechend zu bearbeiten und zu überlagern, so daß sich das hochaufgelöste Gesamtbild mit jedem zusätzlichen Einzelbild vervollständigt.

In einer besonders vorteilhaften Ausgestaltung wird das hochaufgelöste Bild direkt auf dem Detektor selbst erzeugt, so daß beispielsweise nur noch ein Gesamtbild aus der Kamera ausgelesen werden muß. Hierdurch reduziert sich die zu übertragende Datenmenge und damit die Anforderung an die Gerätetechnik drastisch.

Das allmähliche Vervollständigen des Gesamtbildes mit jedem zusätzlichen Einzelbild erlaubt es darüber hinaus, daß ein Benutzer während der Bilderzeugung in den Meßablauf eingreifen kann, beispielsweise wenn die Probe sich während der Iterationen bewegen sollte.

Die Bevorzugung höherer Intensitäten durch nichtlineare Verstärkung kann, wie bereits erwähnt, an verschiedenen Stellen erfolgen. So ist beispielsweise eine nichtlineare Verstärkung vor dem Detektor auf optischem oder optisch/elektronischem Wege möglich. Beispielsweise kann ein sogenannter Intensifier verwendet werden, der optische Strahlung in elektrische Signale umwandelt, diese dann nichtlinear verstärkt und wieder in optische Strahlung wandelt. Alternativ kann die nichtlineare Verstärkung auch auf dem Detektor selbst erfolgen, so daß der Detektor Strahlung ortsauflösend aufnimmt und dabei nichtlinear verstärkt. Schließlich kann die nichtlineare Verstärkung auch nach Abschluß der Detektion an den Detektionssignalen vorgenommen werden. Im Falle einer Überlagerung mehrerer Einzelbilder zu einem Gesamtbild wird also jedes Einzelbild nichtlinear verstärkt.

Die höhere Intensitäten bevorzugende, nichtlineare Verstärkung schärft die Ortsauflösung über die optische Auflösung hinaus. Um den Grad der Auflösungsschärfung einzustellen, ist es vorteilhaft, eine Verstärkungs- oder Dämpfungskennlinie einstellbar zu gestalten.

Wie bereits erwähnt, kann die nichtlineare Verstärkung auch eine nichtlineare Dämpfung sein bzw. umfassen. Eine Dämpfung ist im Sinne der Erfindung eine Verstärkung mit Verstärkungsfaktor kleiner 1. Der Dämpfungsgrad kann stetig mit der Amplitude des Signals abfallen. Für Dämpfung wie Verstärkung sind aber natürlich auch unstetige Verläufe möglich, z.B. so daß insgesamt eine Unterdrückung von unter einem Schwellwert liegenden Intensitäten erfolgt.

Für die Erfindung ist es gemäß dem PALM-Prinzip nötig, daß die aktivierten Markierungsmoleküle durch geeignetes Aufbringen der Umschaltstrahlung bezogen auf die optische Auflösung der Lumineszenzstrahlungsdetektion isoliert sind. Darunter ist zu verstehen, daß die optische Auflösung eine Trennung der aktivierten und lumineszierenden Markierungsmoleküle erlaubt. Dies ist dann der Fall, wenn die Moleküle so beabstandet sind, daß die Signalintensität zwischen den Molekülen auf einen Wert unter dem Spitzenwert, welcher am tatsächlichen Ort der Moleküle vorliegt, abfällt. In einer Schnittdarstellung muß der Signalverlauf also den bereits erwähnten Sattel zeigen. Erfindungsgemäß werden, wie bereits erwähnt, eine Vielzahl von Einzelbildern erzeugt, welche jeweils unterschiedliche Teilmengen der Markierungsmoleküle im Fluoreszenzzustand mit über das optisch Mögliche gesteigerter Auflösung enthalten. Die Schritte a) bis e) des erfindungsgemäßen Verfahrens werden also mehrfach durchlaufen, um ein Gesamtbild der Probe zu erzeugen. Die in jedem Durchlauf nach Schritt e) erhaltenen Bilddaten stellen ein Einzelbild dar und werden jeweils mit den Einzelbildern vorheriger Durchläufe zum Gesamtbild überlagert. Nach dem letzten Durchlauf ist dann das Gesamtbild fertiggestellt.

Je nach verwendeten Markierungsmolekülen ist eine Deaktivierung möglich bzw. erforderlich, damit im nächsten Schritt a) eine statistisch ausgewählte Teilmenge aller Markierungsmoleküle aktiviert werden und möglichst viele Teilbereiche in der Probe vorliegen, in denen innerhalb des beugungsbegrenzt auflösbaren Volumens eine Detektion der Fluoreszenzstrahlung erfolgen kann. Es ist deshalb bevorzugt, daß die Markierungsmoleküle deaktiviert werden können, insbesondere solche Markierungsmoleküle verwendet werden, um nicht mehr zur Abgabe von Fluoreszenzstrahlung anregbar zu sein, so daß vor jedem weiteren Durchlauf sämtliche Markierungsmoleküle deaktiviert werden. Für den nächsten Durchlauf stehen dann alle Markierungsmoleküle für eine erneute Aktivierung zur Verfügung. Die Deaktivierung kann durch Einstrahlung geeigneter Deaktivierungsstrahlung erreicht werden. Es sind aber auch Markierungsmoleküle bekannt, die durch Zeitablauf deaktivieren. Die Deaktivierung umfaßt dann eine entsprechende Zeitspanne zwischen aufeinanderfolgenden Durchläufen abzuwarten, so daß alle oder eine hinreichende Anzahl an Markierungsmolekülen deaktiviert werden.

Beim obenerwähnten iterativen Vorgehen mit mehreren Durchläufen entsteht das Gesamtbild aus einer Vielzahl von Einzelbildern. Es ist bevorzugt, daß das Gesamtbild während der Durchläufe als Zwischenbild angezeigt wird, insbesondere um einem Benutzer einen Eingriff zu ermöglichen. Tritt ein solcher Eingriff auf, ist es zweckmäßig, ein entsprechendes Signal zu erzeugen, z.B. ein von einem Benutzer eingegebenes Abbruchsignal, das Zwischenbild abzuspeichern und die Durchläufe von vorne neu zu beginnen, um ein neues Gesamtbild zu erzeugen.

Vorteilhafterweise erfolgt deshalb zusätzlich eine Anpassung der Aktivierungsleistung und/oder der Anregungsleistung bzw. Deaktivierungsleistung anhand während der Durchläufe erkannter Strukturen. Optimierungskriterium kann dabei das Verhältnis der ungetrennten Moleküle zu den getrennten Molekülen oder der Anteil der getrennten oder ungetrennten Moleküle im Gesamtbild sein. Im PALM-Konzept wird die bereits beschriebene Isolierung der Markierungsmoleküle über die Intensität der Aktivierungsstrahlung eingestellt. Alternativ oder zusätzlich kann das auch über die Intensität der Anregungsstrahlung bzw. ggf. einer Deaktivierungsstrahlung geschehen. Die Entstehung eines Gesamtbildes in mehreren Durchläufen, die jeweils Einzelbilder liefern, kann nun dazu verwendet werden, um die einzustellende Intensität anzupassen bzw. zu optimieren.

Das erfindungsgemäße Verfahren ist natürlich besonders geeignet, um dicke Proben abzubilden, so daß Bilderstapel aufgenommen werden, die senkrecht zur Einfallsrichtung der Strahlung, d.h. in z-Richtung übereinanderliegende Bilder aufweisen. Das erfindungsgemäße Verfahren bietet hierfür besondere Vorteile, da zum einen das PALM-Prinzip eine geringe Belastung der Proben mit Aktivierungsstrahlung mit sich bringt, Bleicheffekte also kein Problem darstellen. Zum anderen benötigt die Abbildung einer dicken Probe durch Bilderstapel eine besonders hohe Anzahl an Bildern. Die erfindungsgemäß erreichte Steigerung der Abbildungsgeschwindigkeit ist für diese Anwendung wichtig wenn nicht sogar ausschlaggebend. Man kann sich leicht vorstellen, daß bei vier Stunden pro Gesamtbild die Aufnahme eines Bilderstapels aus Gesamtbildern eine enorme Zeit benötigt.

Soweit in der vorstehenden oder nachfolgenden Beschreibung Verfahrensmerkmale genannt sind, weist die beschriebene Vorrichtung eine entsprechende Steuereinrichtung auf, welche im Betrieb der Vorrichtung die entsprechenden Verfahrensmerkmale realisiert, d.h. also geeignet ausgebildet ist. Soweit für die Vorrichtung bestimmte Betriebsmerkmale bzw. -eigenschaften beschrieben werden, führt die Vorrichtung, gegebenenfalls unter Steuerung der Steuereinrichtung, analog entsprechende Schritte eines Verfahrens aus.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schemadarstellung eines aktivierten Markierungsmoleküls im auflösungsbegrenzten Volumen;
- Fig. 2: eine Schemadarstellung der Abbildung verschiedener aktivierter und nicht-aktivierter Markierungsmoleküle auf einen ortsauflösenden Detektor,
- Fig. 3: ein Ablaufdiagramm für die Bilderzeugung im PALM-Verfahren,
- Fig. 4: zum Ablaufdiagramm der Fig. 3 gehörende Erläuterungen mit der Abbildung von Markierungsmolekülen auf den Detektor der Fig. 2,
- Fig. 5: eine Schnittdarstellung durch eine aufgrund der Auflösungsbegrenzung bei der Detektion eines fluoreszierenden Markierungsmoleküls entstehenden Intensitätsverteilung bei unterschiedlichen nichtlinearen Verstärkungen,
- Fig. 6: die Funktion der Halbwertsbreite einer auflösungsbegrenzungsbedingt entstandenen Intensitätsverteilung als Funktion der nichtlinearen Verstärkung,
- Fig. 7: einen lateralen Schnitt durch zwei auflösungsbegrenztbedingt entstandene Beugungsscheibchen zweier benachbarter, gleichzeitig fluoreszierender Markierungsmoleküle bei linearer und unterschiedlichen nichtlinearen Verstärkungen,
- Fig. 8: eine Schemadarstellung einer Variante mit nichtlinearer Verstärkung am Detektor,
- Fig. 9: eine Variante mit nichtlinearer Verstärkung nach der Detektion,
- Fig. 10: ein Mikroskop zur PAL-Mikroskopie mit nichtlinearer Verstärkung gemäß der Variante der Fig. 8 oder 9,
- Fig. 11: eine Schemadarstellung eines Intensifiers zur nichtlinearen optisch/elektronischen Verstärkung, und
- Fig. 12: ein Mikroskop ähnlich dem der Fig. 10, jedoch unter Verwendung des Intensifiers der Fig. 11.

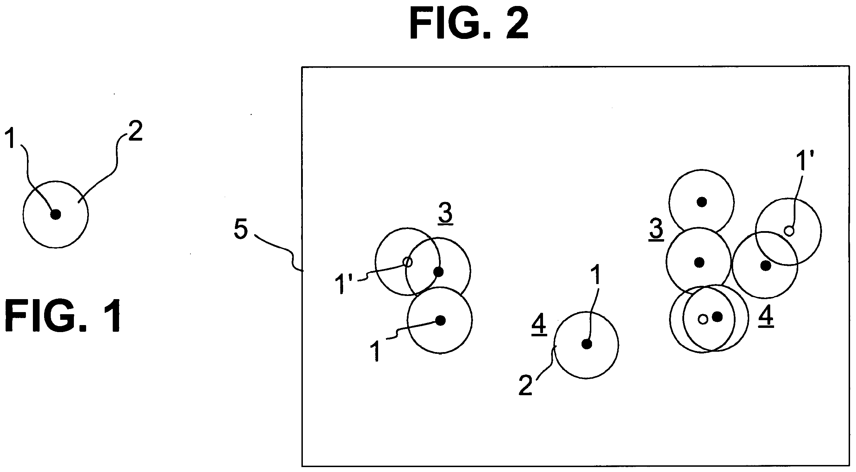

Fig. 1 zeigt schematisch ein Markierungsmolekül 1, das zur Fluoreszenz angeregt wurde. Natürlich erfordert die Fluoreszenzdetektion eine Vielzahl von Anregungen, da jede Anregung genau ein Fluoreszenzphoton liefert und die Strahlungsdetektion eine Integration vieler Photonen benötigt. Die vom Markierungsmolekül 1 abgegebene Fluoreszenzstrahlung kann in einem Mikroskop aufgrund physikalischer Prinzipien lediglich mit einer begrenzten optischen Auflösung detektiert werden. Selbst wenn das Mikroskop die Beugungsgrenze der optischen Auflösung erreicht, werden die Photonen des fluoreszierenden Markierungsmolekül 1 immer noch beugungsbedingt gestreut und somit in einen Beugungsscheibchen 2 detektiert. Das Mikroskop gibt also prinzipiell statt der geometrischen Ausdehnung des Markierungsmoleküls 1, die in Fig. 1 schematisch als schwarzer Kreis gezeichnet ist, ein größeres Objekt wieder, das in Fig. 1 durch das Beugungsscheibchen 2 veranschaulicht ist. Die Größe des Beugungsscheibchens 2 hängt von der Güte der verwendeten Mikroskopieeinrichtung ab und ist durch die Halbwertsbreite der Punktverwaschungsfunktion der optischen Abbildung definiert. Tatsächlich handelt es sich natürlich nicht um ein zweidimensionales Objekt, sondern um ein Beugungsvolumen in das die Fluoreszenzphotonen gelangen. In der zweidimensionalen Darstellung der Fig. 1 erscheint dieses aber als Scheibchen. Der Begriff Beugungsscheibchen wird hier deshalb ganz allgemein für ein maximales Auflösungsvolumen genommen, welches die verwendete Optik erzielen kann. Die verwendete Optik muß aber nicht zwingend an der Beugungsgrenze arbeiten, auch wenn dies zu bevorzugen ist.

Um nun das Markierungsmolekül 1 innerhalb des Beugungsscheibchens 2 genauer lokalisieren zu können, wird das oben bereits allgemein geschilderte PALM-Verfahren eingesetzt. Dieses photoaktiviert einzelne Markierungsmoleküle, wobei in dieser Beschreibung ganz allgemein unter dem Begriff Aktivierung die Aktivierung bestimmter Lumineszenzeigenschaften der Markierungsmoleküle verstanden wird, also sowohl ein Einschalten der Lumineszenzanregbarkeit als auch eine Änderung des Lumineszenzemissionsspektrum, was dem Einschalten bestimmter Lumineszenzeigenschaften entspricht. Die Aktivierung erfolgt nun so, daß es zumindest einige aktivierte Moleküle gibt, deren Schwerpunkt nicht im Beugungsscheibchen anderer aktivierter Moleküle liegt, d.h. die innerhalb des optischen Auflösung zumindest gerade noch unterscheiden werden können.

Fig. 2 zeigt schematisch eine exemplarische Situation auf einem Detektor 5, der die Photonen ortauflösenden integriert. Wie zu sehen ist, gibt es Bereiche 3, in denen die Beugungsscheibchen benachbarter Markierungsmoleküle überlappen. Hierbei sind, wie im linken Bereich 3 der Fig. 2 zu sehen ist, jedoch lediglich diejenigen Markierungsmoleküle relevant, die zuvor aktiviert wurden. Nicht aktivierte Markierungsmoleküle 1' geben die bestimmte Fluoreszenzstrahlung, welche auf dem Matrix-Detektor 5 aufgefangen wird, nicht ab, spielen also keine Rolle.

In den Bereichen 4, z.B. dem in der Mitte des Matrix-Detektors 5 gelegenen Bereiches 4, liegen Markierungsmoleküle 1 so, daß ihr Beugungsscheibchen 2 mit keinem Beugungsscheibchen eines anderen aktivierten Markierungsmolekül 1 überlappt. Der rechte Bereich des Matrix-Detektors 5 zeigt, daß Bereiche 3, in denen Beugungsscheibchen von aktivierten Markierungsmolekülen überlappen, zu Bereichen 4, in denen dies nicht der Fall ist, durchaus benachbart liegen können. Der rechte Bereich 4 verdeutlicht zudem, daß die Nachbarschaft eines aktivierten Markierungsmoleküls 1 zu einem nicht aktivierten Markierungsmolekül 1' für die Detektion keine Rolle spielt, da ein solches Markierungsmolekül 1' ja die vom Matrix-Detektor 5 detektierte Fluoreszenzstrahlung nicht abgibt, also nicht fluoresziert.

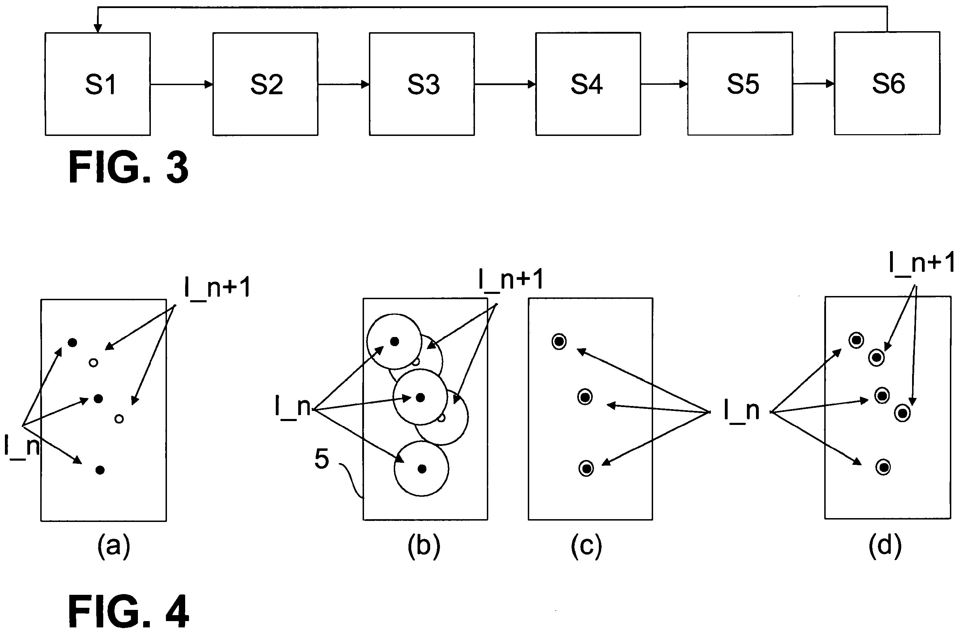

Zur Aufnahme eines jenseits der apparativ vorgegebenen optischen Auflösung detaillierten Bildes, das im Sinne dieser Beschreibung ein hochaufgelöstes Bild ist, werden nun die in Fig. 3 schematisch dargestellten Schritte eingesetzt.

In einem ersten Schritt S1 wird mittels eines Umschaltsignals eine Teilmenge der Markierungsmoleküle aktiviert; sie werden also von einem ersten Zustand, in dem sie zur Abgabe der bestimmten Fluoreszenzstrahlung nicht anregbar sind, in einen zweiten Zustand geschaltet, in dem sie zur Abgabe der bestimmten Fluoreszenzstrahlung anregbar sind. Natürlich kann das Aktivierungssignal auch eine selektive Deaktivierung bewirken, also in Schritt S1 auch ein inverses Vorgehen verwendet werden. Wesentlich ist, daß nach Schritt S1 lediglich eine Teilmenge der Markierungsmoleküle zur Abgabe der bestimmten Fluoreszenzstrahlung angeregt werden kann. Die Aktivierung bzw. Deaktivierung (nachfolgend wird zur Vereinfachung lediglich der Fall der Aktivierung geschildert) erfolgt abhängig von den verwendeten Markierungsmolekülen. Bei einem Farbstoff wie z.B. DRONPA, PA-GFP oder reversibel schaltbaren synthetischen Farbstoffen (wie Alexa/Cyan-Konstrukten) erfolgt die Aktivierung durch optische Strahlung, ist das Umschaltsignal also Umschaltstrahlung.

Die unter der Fig. 3 dargestellte Fig. 4 zeigt im Teilbild a den Zustand nach Schritt S1. Lediglich eine Teilmenge der Markierungsmoleküle l_n ist aktiviert. Die Markierungsmoleküle dieser Teilmenge sind mit einem voll ausgezeichneten schwarzen Punkt wiedergegeben. Die restlichen Markierungsmoleküle sind in diesem Schritt nicht aktiviert worden. Sie sind in Teilbild a der Fig. 4 mit Ln+1 bezeichnet.

Markierungsmoleküle, die aktiviert wurden, können dann in einem zweiten Schritt S2 zur Abgabe von Fluoreszenzstrahlung angeregt werden. Als Fluoreszenzfarbstoffe werden vorzugsweise aus dem Stand der Technik bekannte fluoreszierende Proteine, wie PA-GFP oder auch DRONPA verwendet. Die Aktivierung erfolgt bei solchen Molekülen mit Strahlung im Bereich von 405 nm, die Anregung zur Fluoreszenzstrahlung bei einer Wellenlänge von etwa 488 nm, und die Fluoreszenzstrahlung liegt in einem Bereich oberhalb von 490 nm.

In einem dritten Schritt S3 wird die abgegebene Fluoreszenzstrahlung detektiert, beispielsweise durch Integration der aufgenommenen Fluoreszenzphotonen, so daß sich die im darunter liegenden Teilbild b der Fig. 4 dargestellte Situation auf dem Matrix-Detektor 5 ergibt. Wie zu sehen ist, überlappen die Beugungsscheibchen der aktivierten Markierungsmoleküle Ln nicht. Die Größe der Beugungsscheibchen wird durch die optische Auflösung der Abbildung auf den Matrix-Detektor 5 festgelegt. Zusätzlich sind in Teilbild b der Fig. 4 (theoretische) Beugungsscheibchen von Fluoreszenzmolekülen eingezeichnet, die zur nicht-aktivierten Gruppe Ln+1 gehören. Da diese nicht-aktivierten Markierungsmoleküle keine Fluoreszenzstrahlung abgeben, stört keine in deren (theoretischen) Beugungsscheibchen liegende Fluoreszenzstrahlung die Detektion der Fluoreszenzstrahlung der Teilmenge Ln der aktivierten Markierungsmoleküle.

Damit in der Teilmenge Ln möglichst wenige Beugungsscheibchen so überlappen, daß die Markierungsmoleküle gar nicht mehr unterscheidbar sind, wird die Aktivierungsenergie so eingestellt, daß die Teilmenge Ln nur einen vergleichsweise geringen Anteil der Gesamtmenge der Markierungsmoleküle ausmacht, so daß statistisch viele Markierungsmoleküle bezogen auf das mit der optischen Anordnung auflösbare Volumen unterscheidbar sind.

In einem vierten Schritt S4 wird die aufgenommene Fluoreszenzstrahlung nichtlinear verstärkt, wodurch die Auflösung, mit der die Lage der aktivierten Markierungsmoleküle angebbar ist, über die Auflösung der optischen Anordnung hinaus geschärft wird, wie das Teilbild c der Fig. 4 zeigt.

Die nichtlineare Verstärkung kann beispielsweise gemäß der Funktion S = A • F^{N} (Gleichung 1) oder S = A • exp^{F/w} (mit w = 10^{-N} (Gleichung 2)) beschrieben werden, wobei F die Amplitude des Fluoreszenzsignals, A ein Normierungsfaktor und N eine ganze Zahl größer 1 ist. Natürlich können auch andere Funktionen verwendet werden.

Durch die nichtlineare Verstärkung reduziert sich die Halbwertsbreite der Beugungsscheibchen in allen drei Dimensionen, so daß sich die in Teilbild c der Fig. 4 schematisch dargestellten verkleinerten Beugungsscheibchen ergeben. Besonders vorteilhaft ist jedoch eine starke nichtlineare Abhängigkeit des Parameters S von F, also z.B. hohe Werte für N in den Gleichungen 1 oder 2.

Die Nichtlinearität ist vorzugsweise so gewählt, daß die Halbwertsbreite der Beugungsscheibe einer angestrebten räumlichen Auflösung für die Ortsangabe der Markierungsmoleküle entspricht.

Neben einer nichtlinearen Verstärkung kann, wie bereits erwähnt, auch eine nichtlineare Dämpfung verwendet werden. Hierbei werden Fluoreszenzsignale geringer Amplitude oder Intensität gedämpft, wohingegen starke Signale zumindest weitgehend ungedämpft bleiben. Natürlich kann auch eine Kombination von nichtlinearer Verstärkung und Dämpfung verwendet werden. In einem optionalen fünften Schritt S5 erfolgt eine Normierung oder ein Abschneiden der verstärkten Fluoreszenzsignale, soweit deren Intensität bzw. der Pegel unter einem Schwellwert liegt.

In einem sechsten Schritt wird das derart erhaltene Teilbild in ein Gesamtbild eingestellt. Anschließend wird zu Schritt S1 zurückgesprungen, so daß mit jedem Durchlauf ein Teilbild erhalten wird, das zu einem Gesamtbild aufsummiert wird. Im nächsten Durchlauf wird, gegebenenfalls nach geeigneter Deaktivierung der Markierungsmoleküle, eine andere Teilmenge der Markierungsmoleküle aktiviert, z.B. die in Fig. 4 dargestellt Teilmenge Ln+1.

Durch den mehrfachen Durchlauf durch die Schritte S1 bis S6 wird das Gesamtbild aus Einzelbildern der einzelnen Durchläufe aufgebaut, welche die Orte der Markierungsmoleküle mit einer Ortsauflösung angeben, die gegenüber der Auflösung der optischen Abbildung geschärft ist. Durch eine entsprechende Anzahl von Iterationen baut sich somit ein hochaufgelöstes Gesamtbild sukzessive auf. Die Reduktion des Beugungsscheibchens erfolgt dabei bei dem Verfahren in allen drei Raumdimensionen, wenn mehrere Bildstapel, welche in z-Richtung beabstandet sind, aufgenommen werden. Insgesamt enthält das Gesamtbild dann in allen drei Raumrichtungen hochaufgelöst die Ortsangabe der Markierungsmoleküle.

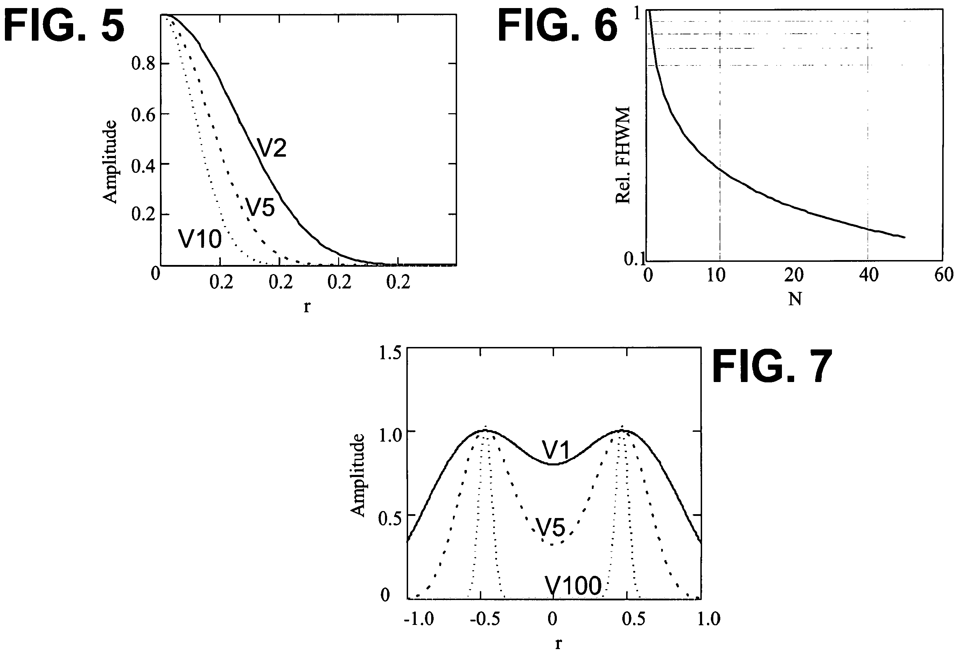

Fig. 5 zeigt einen radialen Schnitt durch ein Beugungsscheibchen 2 für verschiedene nichtlineare Verstärkungen V2, V5 und V10. Die Zahl nach dem Buchstaben V entspricht dabei dem Wert für N in Gleichung 1. Jeweils gezeichnet ist dabei das verstärkte Fluoreszenzsignal in Abhängigkeit vom Abstand der tatsächlichen Lage des Markierungsmoleküls, das bei r = 0 liegt. Man erkennt, daß mit zunehmender Nichtlinearität, also N = 2, 5 oder 10, die Breite der Verteilung abnimmt. Dadurch wird das Schärfen der Ortsangabe über die optische Auflösung hinaus erreicht.

Fig. 6 zeigt den Quotienten aus Halbwertsbreite bei nichtlinearer Verstärkung und linearer Verstärkung als Funktion des Verstärkungsfaktors N. Auf der y-Achse der Fig. 6 ist also die relative Halbwertsbreite (Rel.FHWN) aufgetragen. Man sieht, daß mit steigendem Wert von N in Gleichung 1 (analoges erhält man für die Gleichung 2) die Halbwertsbreite des nichtlinear verstärkten Signals die Halbwertsbreite relativ schnell auf unter 20% der Halbwertsbreite des linear verstärkten Signals abfällt. Ein Bild mit 10-fach verbesserter Auflösung erhält man bei einer nicht linearen Verstärkung mit einem Wert von N ≥ 100 in Gleichung 1.

Fig. 7 zeigt einen lateralen Schnitt durch zwei benachbarte Beugungsscheibchen, welche von zwei benachbart liegenden, aktivierten Aktivierungsmolekülen stammen. Die tatsächlichen Orte der Markierungsmoleküle sind bei einem r-Wert von -0,5 bzw.+0,5 in Fig. 7 eingetragen. Auf der y-Achse ist die Amplitude des Fluoreszenzsignals aufgetragen und zwar für eine nichtlineare Verstärkung (V1) sowie Verstärkungen mit N = 5 bzw. N = 100 (V5 bzw. V100). Ohne nichtlineare Verstärkung, d.h. bei V1, sind die einzelnen Moleküle nur schwach oder gerade noch trennbar, da die Gesamt-Amplitude bei r = 0 noch einen schwachen Sattel hat. Die Moleküle sind mit der gegebenen optischen Auflösung deshalb gerade noch unterscheidbar, weil die Schwerpunkte der Punktverwaschungsfunktionen noch etwas mehr beabstandet sind, als die Halbwertsbreite dieser Funktionen ist. Wesentlich für die Unterscheidbarkeit ist hier, daß zwischen den beiden Amplitudenspitzen ein lokales Minimum liegt.

Durch die nichtlineare Verstärkung wird das Minimum vertieft, so daß beide Moleküle im Gesamtbild nun klar getrennt erscheinen, was die Steigerung der Auflösung über die optisch gegebene Grenze deutlich macht. Eine gleichzeitige Aktivierung der bei r = -0,5 und r = +0,5 liegenden Fluoreszenzmoleküle erlaubt in Kombination mit der nichtlinearen Verstärkung also eine Separation dieser Moleküle, die weitaus besser ist als optisch möglich.

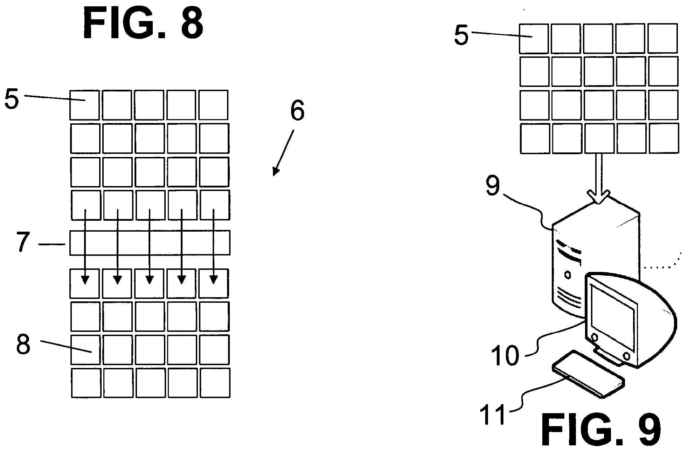

Fig. 8 zeigt eine erste Variante zur nichtlinearen Verstärkung. Hierbei wird eine spezielle Detektoreinrichtung 6 verwendet, die beispielsweise als Frame Transfer Matrix Detektor (CCD) realisiert werden kann, der einen Matrix-Detektor 5 aufweist. Die Pixelgröße des Matrix-Detektors 5 entspricht vorzugsweise der halben angestrebten Auflösung des Mikroskops. Im Matrix-Detektor 5 werden detektierte Einzelphotonen der Fluoreszenzstrahlung aufintegriert. Dies entspricht Schritt S3. Am Ende der Integrationszeit für einen Integrationsschritt wird der so erhaltene Frame über eine Verstärkereinheit 7 in eine Speicherregion 8 geschoben. Die Verstärkereinheit 7 verfügt über eine, vorzugsweise einstellbare, nichtlineare Verstärkungskennlinie und bewirkt damit die nichtlineare Verstärkung gemäß Schritt S4. Die Amplitude wie der Maximalwert der Kennlinie sind vorzugsweise einstellbar. In der Speicherregion 8 werden die von der Verstärkereinheit 7 für jedes Pixel des Matrix-Detektors 5 erzeugten Ladungen aufsummiert. Dies entspricht Schritt S6 der Abbildung 3.

Am Ende der Iterationen wird aus der Speicherregion 8 das hochaufgelöste Gesamtbild ausgelesen. Das Auslesen kann auch vor Abschluß aller Iterationen erfolgen, um ein Zwischenbild zu erhalten. Anhand dieser Zwischenbilder kann der Benutzer beobachten, wie sich das hochauflösende Gesamtbild aufbaut und gegebenenfalls in den Meßablauf eingreifen. Vorteilhafterweise erfolgt eine Anpassung der Intensität der Aktivierungsstrahlung, um einen möglichst hohen Anteil an isolierten, aktivierten Markierungsmolekülen zu erzielen. Auch können in dieser Variante mehr Markierungsmoleküle pro Durchlauf aktiviert werden, so daß die Zahl der nötigen Durchläufe reduziert ist.

Werden Zwischenbilder aus der Speicherregion 8 ausgelesen, wird das Gesamtbild dann durch Summation der einzelnen Zwischenbilder, beispielsweise an einem Computer, berechnet und angezeigt.

Fig. 9 zeigt eine zweite Variante, bei der der Matrix-Detektor 5 pro Iterationsschritt die Photonen der aufgenommenen Fluoreszenzstrahlung integriert und jeweils als Bild an einen Computer 9 liefert. Der Computer 9 weist eine Anzeige 10, z.B. einen Monitor, sowie eine Eingabeeinrichtung 11, z.B. eine Tastatur o.ä., auf.

Die Verfahrensschritte S2 bis S6 erfolgen somit in dieser Variante im Computer 9. Für diese Variante ist die Bildrate des Matrix-Detektors ausschlaggebend für die Gesamtmeßzeit, so daß ein Matrix-Detektor 5 mit möglichst hoher Bildrate vorteilhaft ist, um die Meßzeit zu reduzieren. Vorteilhaft bei dieser Variante ist, daß die Einzelbilder sofort nach ihrer Entstehung zur Verfügung stehen, so daß bereits in den Einzelbildern eine Bildauswertung erfolgen kann.

Weiter können die Einzelbilder jedes Durchlaufs Fokusebenen abhängig aufgezeichnet und zu einem 3D-Gesamtbild aus nicht linear verstärkten Einzelbildern zusammengesetzt werden, wobei zusätzlich noch eine Normierung möglich ist. Die Auflösungserhöhung ist damit in allen drei Raumrichtungen gegeben.

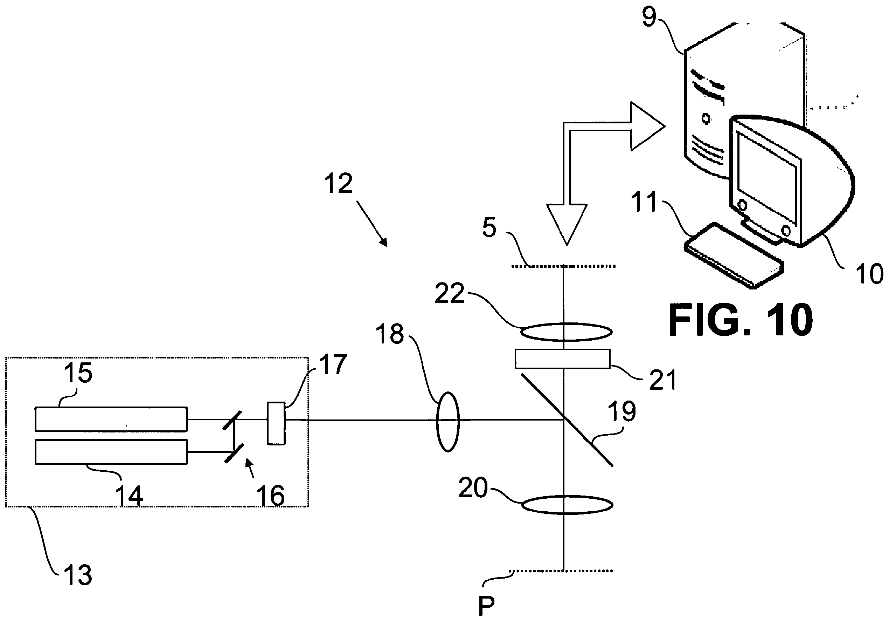

Fig. 10 zeigt schematisch ein Mikroskop 12 zur hochauflösenden Abbildung einer Probe P. Die Probe ist beispielsweise mit dem Farbstoff DRONPA (vergleiche WO 2007009812 A1) markiert. Zur Aktivierung sowie zur Fluoreszenzanregung weist das Mikroskop 12 eine Strahlungsquelle 13 auf, die über einzelne Laser 14 und 15 verfügt, deren Strahlen über einen Strahlvereiniger 16 zusammengeführt wird. Die Laser 14 und 15 können beispielsweise bei 405 nm (Aktivierungsstrahlung) und 488 nm (Fluoreszenzanregung und Deaktivierung) Strahlung abgeben. Es sind auch Farbstoffe bekannt (z.B. der Farbstoff namens DENDRA (vgl. Gurskaya et al., Nature Biotech., Band 24, S. 461-465, 2006)), bei denen die Aktivierung und Fluoreszenzanregung bei ein- und derselben Wellenlänge erfolgen kann. Dann genügt ein Laser.

Ein akustisch optischer Filter 17 dient zur Wellenlängenselektion und zum schnellen Schalten oder Abschwächen einzelner Laserwellenlängen. Eine Optik 18 fokussiert die Strahlung über einen dichroitischen Strahteiler 19 in eine Pupille eines Objektivs 20, so daß auf der Probe P die Strahlung der Strahlungsquelle 13 als Weitfeldbeleuchtung einfällt.

In der Probe P entstehende Fluoreszenzstrahlung wird über das Objektiv 20 eingesammelt. Der dichroitische Strahlteiler 19 ist so ausgelegt, daß er die Fluoreszenzstrahlung passieren läßt, so daß sie durch ein Filter 21 zu einer Tubuslinse 22 gelangt, so daß insgesamt die fluoreszierende Probe P auf den Detektor 5 abgebildet wird. Je nach Ausbildung des Detektors 5 führt die Bauweise der Fig. 10 also die Variante gemäß Fig. 8 oder Fig. 9 aus.

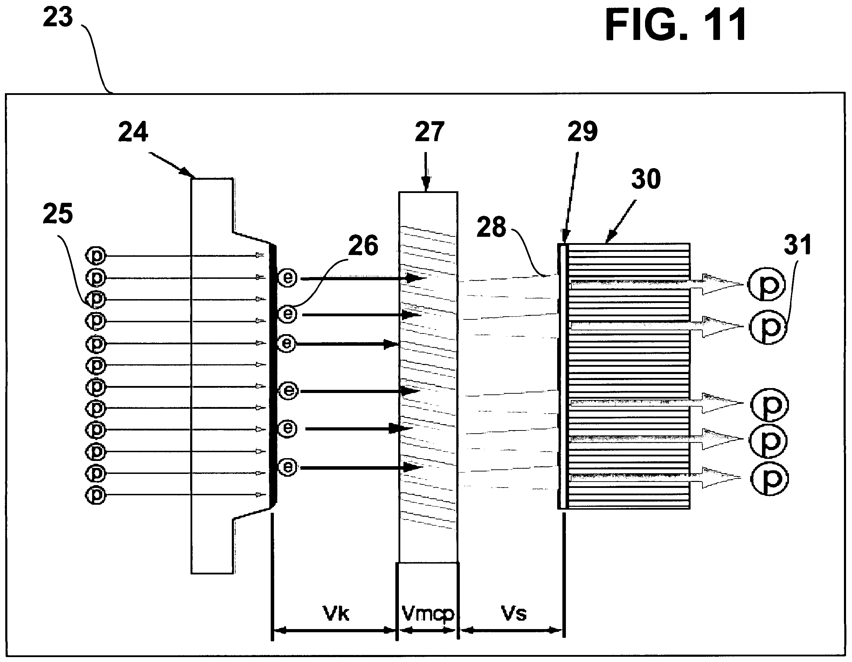

Fig. 11 zeigt eine weitere Variante zur nichtlinearen Verstärkung. Hier werden die Schritte S3 und S4 in einem sogenannten Intensifier 23 ausgeführt. Dieser weist ein Eingangsfenster 24 auf, an dem Photonen 25 der einfallenden Strahlung aufgenommen werden. Die Photonen sind durch ein p im Kreis symbolisiert. Am Eingangsfenster 24 werden die Photonen in Elektronen 26 (symbolisiert durch ein e im Kreis) umgewandelt. Die Elektronen werden dann mit einer multi channel plate (MCP) 27 nichtlinear verstärkt und gelangen als entsprechend nichtlinear verstärkter Elektronenstrahl 28 auf einen Phosphoreszenz-Schirm 29, der ein Ausgangsfenster 30 aufweist und die Elektronen in Photonen 31 wandelt. Die nichtlineare Verstärkung wird am Intensifier 23 insbesondere über eine MCP-Spannung Vmcp eingestellt. Eine Katodenspannung Vk sowie eine Schirmspannung Vs sorgen dafür, daß die Elektronen zur MCP 27 gelangen bzw. von dort zum Schirm 29.

Der Intensifier 23 ist bezogen auf die Richtung der einfallenden Strahlung, d.h. die Einfallsrichtung der Photonen 25 ein vergleichsweise schmales Bauteil und behält vor allem die Strahlausbreitungsrichtung bei. Er bewirkt weiter eine nichtlineare Verstärkung der einfallenden Strahlung, d.h. hohe Dichten der Photonen 25 werden gegenüber niedrigen Photonendichten überproportional verstärkt und somit bevorzugt.

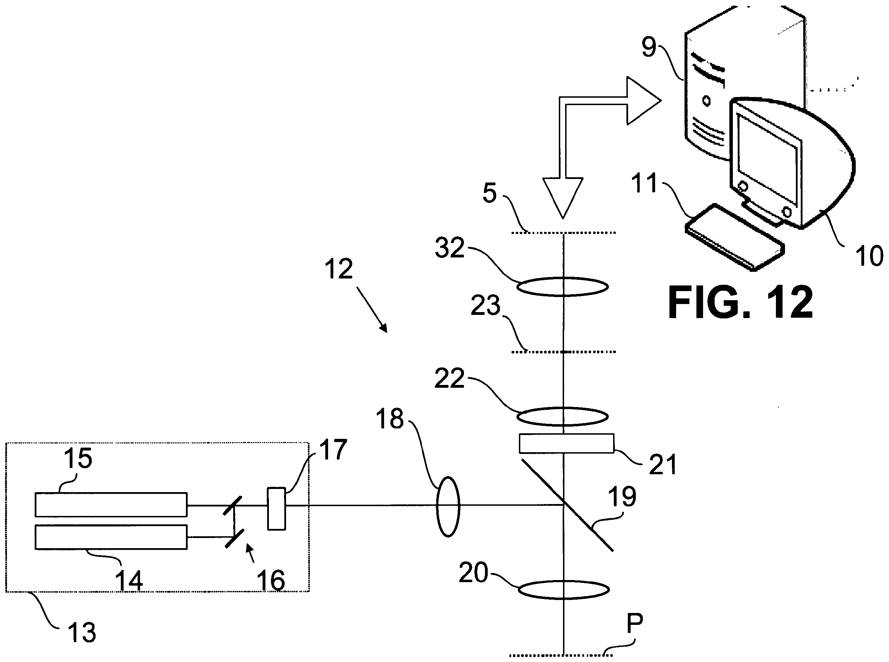

Fig. 12 zeigt ein Mikroskop 12, bei dem die nichtlineare Verstärkung mittels des Intensifiers 23 erfolgt, der hier in einer Zwischenbildebene der Abbildung der fluoreszierenden Probe P auf dem Matrix-Detektor 5 liegt. Es ist deshalb eine weitere Optik 32 vorgesehen, welche die am Ausgangsfenster 30 austretende Strahlung auf den Matrix-Detektor 5 abbildet. Ansonsten entspricht die Bauweise des Mikroskops der Fig. 12 dem der Fig. 10.

Die Mikroskope der Fig. 10 und 12 erlauben ein Gesamtbild, das eine um Faktor 10 gegenüber der optischen Auflösung des Mikroskops gesteigerte Ortsauflösung hat. Die optische Auflösung des Mikroskops kann beispielsweise 250 nm lateral und 500 nm axial betragen. Bei Verwendung des Intensifiers sind nichtlineare Verstärkungen möglich, die sogar eine Auflösung der Ortsangabe im Gesamtbild von etwa 10 nm erlauben.

Die hier beispielhaft erläuterten Varianten zur nichtlinearen Verstärkung, insbesondere hinsichtlich des Intensifiers 23 oder des Matrix-Detektors der Fig. 8 können erfindungsgemäß auch durch weitere optisch nicht lineare Medien ergänzt oder ersetzt werden, wie beispielsweise Second Harmonic Generation-Kristalle, Farbstoffe, sättigbare Absorber etc. Wichtig ist dabei, daß gemäß den Verfahrensschritten S3 und S4 die Fluoreszenzstrahlung der aktivierten Markierungsmoleküle zuerst aufintegriert und dann nichtlinear verstärkt werden. Detektion und nichtlineare Verstärkung erfolgen in den beschriebenen Varianten also getrennt, wobei, soweit keine nichtlineare optische Verstärkung, wie z.B. durch den Intensifier 23, vorgenommen wird, die nichtlineare Verstärkung vorzugsweise nach der Aufnahme der Fluoreszenzstrahlung, z.B. nach geeigneter Integration, erfolgt.

## Patentansprüche

1. Verfahren zur räumlich hochauflösenden Lumineszenzmikroskopie einer Probe, die mit Markierungsmolekülen (1) markiert ist, welche mit einem Umschaltsignal aktivierbar sind, so dass sie erst dann zur Abgabe bestimmter Lumineszenzstrahlung anregbar sind, wobei das Verfahren folgende Schritte aufweist:
a) Einbringen des Umschaltsignals auf die Probe derart, daß nur eine Teilmenge der in der Probe vorhandenen Markierungsmoleküle (1) aktiviert werden, wobei in der Probe Teilbereiche bestehen, in denen aktivierte Markierungsmoleküle (1) zu den ihnen nächst benachbarten aktivierten Markierungsmoleküle (1) einen Abstand haben, der größer oder gleich einer optischen Auflösung einer Detektion von Lumineszenzstrahlung ist,
b) Anregen (S1, S2) der aktivierten Moleküle (1) zur Abgabe von Lumineszenzstrahlung,
c) Detektion (S3) der Lumineszenzstrahlung mit der optischen Auflösung und
d) Erzeugen von Bilddaten aus der in Schritt c) aufgenommenen Lumineszenzstrahlung, die die geometrischen Orte der Lumineszenzstrahlung abgebenden Markierungsmoleküle mit einer über die optische Auflösung gesteigerten Ortsauflösung angeben,
**dadurch gekennzeichnet, daß**
e) die Detektion der Lumineszenzstrahlung in Schritt c) oder die Erzeugung der Bilddaten in Schritt d) eine nichtlineare, höhere Intensitäten bevorzugende Verstärkung (S4, S5) aufgenommener Lumineszenzstrahlung umfaßt, um die Ortsauflösung über die optische Auflösung zu schärfen und die Schritte a)-e) mehrfach durchlaufen werden, um ein Gesamtbild der Probe zu erzeugen, wobei jeweils Einzelbilder erzeugt werden, wobei nach Schritt e) erhaltene Bilddaten der Einzelbilder jeweils mit Bilddaten aus vorherigen Durchläufen zum Gesamtbild überlagert werden, so daß nach dem letzten Durchlauf das Gesamtbild fertiggestellt ist (S6).

2. Verfahren nach Anspruch 1, **dadurch gekennzeichnet, daß** in Schritt c) die Lumineszenzstrahlung ortsaufgelöst integriert wird und in Schritt e) das Integrationsresultat nichtlinear verstärkt wird.

3. Verfahren nach einem der obigen Ansprüche, **dadurch gekennzeichnet, daß** eine Verstärkungskennlinie der nichtlineare Verstärkung einstellbar ist.

4. Verfahren nach einem der obigen Ansprüche, **dadurch gekennzeichnet, daß** die nichtlineare Verstärkung eine Unterdrückung von unter einem Schwellwert liegenden Intensitäten umfaßt.

5. Verfahren nach einem der Ansprüche 1-4, **dadurch gekennzeichnet, daß** die Markierungsmoleküle deaktiviert werden können, um nicht mehr zur Abgabe von Lumineszenzstrahlung anregbar zu sein, und daß vor jedem weiteren Durchlauf sämtliche Markierungsmoleküle (1) deaktiviert werden.

6. Verfahren nach Anspruch 5, **dadurch gekennzeichnet, daß** während der Durchläufe das entstehende Gesamtbild als Zwischenbild angezeigt wird.

7. Verfahren nach Anspruch 6, **dadurch gekennzeichnet, daß** das Zwischenbild auf ein während der Durchläufe auftretendes Signal hin, z.B. einem von einem Benutzer eingegebenes Abbruchsignal, abgespeichert wird und die Durchläufe von vorne neu begonnen werden, um ein neues Gesamtbild zu erzeugen.

8. Verfahren nach Anspruch 7, **dadurch gekennzeichnet, daß** zwischen den Durchläufen die Intensität der Einbringung des Umschaltsignals und/oder der Anregung der aktivierten Moleküle (1) verändert wird, um die Größe der Teilmenge zu maximieren.

9. Vorrichtung (12) zur räumlich hochauflösenden Fluoreszenzmikroskopie einer Probe, die mit Markierungsmolekülen (1) markiert ist, welche mit einem Umschaltsignal aktivierbar sind, so daß sie erst dann zur Abgabe bestimmter Lumineszenzstrahlung anregbar sind, wobei die Vorrichtung aufweist:
- Mittel zum Einbringen des Umschaltsignals auf die Probe derart, daß nur eine Teilmenge der in der Probe vorhandenen Markierungsmoleküle (1) aktiviert werden, wobei in der Probe Teilbereiche bestehen, in denen aktivierte Markierungsmoleküle zu den ihnen nächst benachbarten aktivierten Markierungsmoleküle (1) einen Abstand haben, der größer oder gleich einer optischen Auflösung einer Detektion von Lumineszenzstrahlung ist,
- Mittel (13) zum Anregen der aktivierten Moleküle zur Abgabe von Lumineszenzstrahlung,
- eine Detektoreinrichtung (5, 6), die Lumineszenzstrahlung mit der optischen Auflösung aufnimmt und ein ortsaufgelöstes Detektionssignal abgibt,
- eine Bilddatenerzeugungseinrichtung, die aus dem Detektionssignal Bilddaten erzeugt, welche die geometrischen Orte der Lumineszenzstrahlung abgebenden Markierungsmoleküle mit einer über die optische Auflösung gesteigerten Ortsauflösung angeben,
**dadurch gekennzeichnet, daß**
- ein nichtlinearer Verstärker (7) vorgesehen ist, der aufgenommene Lumineszenzstrahlung oder das Detektionssignal nichtlinear, höhere Intensitäten bevorzugend verstärkt, um die Ortsauflösung über die optische Auflösung zu schärfen,
- wobei die Bilddatenerzeugungseinrichtung ausgebildet ist um Einzelbilder zu erzeugen und Einzelbilder mit Bilddaten aus vorherigen Durchläufen zu einem Gesamtbild zu überlagern, so dass nach einem letzten Durchlauf das Gesamtbild fertiggestellt ist.

10. Vorrichtung (12) nach Anspruch 9, **dadurch gekennzeichnet, daß** die Detektoreinrichtung (5, 6) Lumineszenzstrahlung ortsaufgelöst integriert und der Verstärker (7) das Integrationsresultat nichtlinear verstärkt.

11. Vorrichtung (12) nach einem der Ansprüche 9 oder 10, **dadurch gekennzeichnet, daß** der nichtlineare Verstärker (7) eine einstellbare Verstärkungskennlinie aufweist.

12. Vorrichtung (12) nach einem der Ansprüche 9 bis 11, **dadurch gekennzeichnet, daß** der nichtlineare Verstärker (7) unter einem Schwellwert liegenden Intensitäten unterdrückt.

13. Vorrichtung (12) nach einem der Ansprüche 9 bis 12, **gekennzeichnet durch** ein Steuergerät (9), das den Betrieb der Mittel zum Einbringen des Umschaltsignals, der Mittel (13) zum Anregen der aktivierten Moleküle, der Detektoreinrichtung (5, 6) und der Bilddatenerzeugungseinrichtung und es Verstärkers steuern und dabei einen Betrieb nach einem der obigen Verfahrensansprüche bewirken kann.

14. Vorrichtung (12) nach Anspruch 13 ausgebildet zur Durchführung des Verfahrens nach einem der Ansprüche 6, 7 oder 8, **gekennzeichnet durch** eine Anzeigeeinrichtung (10) zur Anzeige des Zwischenbildes.

15. Vorrichtung (14) nach einem der Ansprüche 9 bis 14, **gekennzeichnet durch** einen dem Detektor (5, 6) vorgeordneten nichtlinearen optischen oder elektro-optischen Verstärker, insbesondere einen Intensifier (23).

## Claims

1. Method for examining a sample with spatially highly resolved luminescence microscopy, said sample being marked by marker molecules (1) that are activatable by way of a switching signal such that only then are they excitable to emit certain luminescence radiation, wherein the method comprises the following steps:
a) introducing the switching signal to the sample in such a way that only a subset of the marker molecules (1) present in the sample are activated, wherein there are portions in the sample in which activated marker molecules (1) have a distance from their next closest activated marker molecule (1) which is greater than or equal to an optical resolution of a detection of luminescence radiation,
b) exciting (S1, S2) the activated molecules (1) to emit luminescence radiation,
c) detecting (S3) the luminescence radiation with the optical resolution and
d) producing image data from the luminescence radiation recorded in step c), said luminescence radiation specifying the geometric locations of the luminescence-radiation-emitting marker molecules with a spatial resolution that is increased beyond the optical resolution,
**characterized in that**
e) the detection of the luminescence radiation in step c) or the production of the image data in step d) comprises a nonlinear amplification (S4, S5) of recorded luminescence radiation, said amplification preferring higher intensities, in order to sharpen the spatial resolution beyond the optical resolution and steps a)-e) are iterated a number of times in order to produce an overall image of the sample, wherein individual images are produced in each case, wherein image data of the individual images obtained after step e) are superposed on image data from preceding iterations in each case in order to form the overall image such that the overall image has been completed (S6) after the final iteration.

2. Method according to Claim 1, **characterized in that** the luminescence radiation is integrated with a spatial resolution in step c) and the integration result is amplified in a nonlinear manner in step e).

3. Method according to any one of the preceding claims, **characterized in that** a gain characteristic of the nonlinear amplification is adjustable.

4. Method according to any one of the preceding claims, **characterized in that** the nonlinear amplification comprises a suppression of intensities that lie under a threshold.

5. Method according to any one of Claims 1 to 4, **characterized in that** the marker molecules can be deactivated so as no longer to be excitable to emit luminescence radiation and **in that** all marker molecules (1) are deactivated before each further iteration.

6. Method according to Claim 5, **characterized in that** the arising overall image is displayed as an intermediate image during the iterations.

7. Method according to Claim 6, **characterized in that** the intermediate image is stored following a signal that occurs during the iterations, for example a termination signal entered by a user, and the iterations are started anew in order to produce a new overall image.

8. Method according to Claim 7, **characterized in that** the intensity of the introduction of the switching signal and/or the intensity of the excitation of the activated molecules (1) is modified between the iterations in order to maximize the size of the subset.

9. Apparatus (12) for examining a sample with spatially highly resolved fluorescence microscopy, said sample being marked by marker molecules (1) that are activatable by way of a switching signal such that only then are they excitable to emit certain luminescence radiation, wherein the apparatus has:
- means for introducing the switching signal onto the sample in such a way that only a subset of the marker molecules (1) present in the sample are activated, wherein there are portions in the sample in which activated marker molecules have a distance from their next closest activated marker molecule (1) which is greater than or equal to an optical resolution of a detection of luminescence radiation,
- means (13) for exciting the activated molecules to emit luminescence radiation,
- a detector device (5, 6) which records luminescence radiation at the optical resolution and emits a spatially resolved detection signal,
- an image data production device which produces image data from the detection signal, said image data specifying the geometric locations of the luminescence-radiation-emitting marker molecules with a spatial resolution that is increased beyond the optical resolution,
**characterized in that**
- provision is made of a nonlinear amplifier (7) which amplifies the recorded luminescence radiation or the detection signal in a nonlinear manner that prefers higher intensities in order to sharpen the spatial resolution beyond the optical resolution,
- wherein the image data production device is embodied to produce individual images and superpose individual images on image data from preceding iterations to form an overall image such that the overall image has been completed after a final iteration.

10. Apparatus (12) according to Claim 9, **characterized in that** the detector device (5, 6) integrates luminescence radiation in a spatially resolved manner and the amplifier (7) amplifies the integration result in a nonlinear manner.

11. Apparatus (12) according to either of Claims 9 and 10, **characterized in that** the nonlinear amplifier (7) has an adjustable gain characteristic.

12. Apparatus (12) according to any one of Claims 9 to 11, **characterized in that** the nonlinear amplifier (7) suppresses intensities that lie under a threshold.

13. Apparatus (12) according to any one of Claims 9 to 12, **characterized by** a controller (9) which can control the operation of the means for introducing the switching signal, the means (13) for exciting the activated molecules, the detector device (5, 6) and the image data production device and the amplifier and, in the process, can bring about an operation according to one of the aforementioned method claims.

14. Apparatus (12) according to Claim 13, embodied to carry out the method according to any one of Claims 6, 7 or 8, **characterized by** a display device (10) for displaying the intermediate image.

15. Apparatus (14) according to any one of Claims 9 to 14, **characterized by** a nonlinear optical or electro-optical amplifier, in particular an intensifier (23), arranged upstream of the detector (5, 6).

## Revendications

1. Procédé de microscopie de luminescence à haute résolution spatiale d'un échantillon qui est marqué avec des molécules de marquage, lesquelles peuvent être activées avec un signal de basculement afin qu'elles puissent être alors excitées pour délivrer un rayonnement luminescent déterminé, dans lequel le procédé comprend les étapes consistant à :
a) induire le signal de basculement sur l'échantillon de manière à ce que seules des quantités partielles des molécules de marquage (1) présentes dans l'échantillon soient activées, dans lequel l'échantillon contient des zones partielles dans lesquelles des molécules de marquage activées (1) présentent une distance par rapport aux molécules de marquage (1) activées qui leur sont immédiatement voisines qui est supérieure ou égale à une résolution optique d'une détection du rayonnement de luminescence,
b) exciter (S1, S2) les molécules activées (1) pour délivrer un rayonnement de luminescence,
c) détecter (S3) le rayonnement de luminescence présentant la résolution optique, et
d) générer des données d'image à partir du rayonnement de luminescence acquis lors de l'étape c), lesquelles données d'image indiquent la position géométrique des molécules de marquage délivrant le rayonnement de luminescence avec une résolution spatiale augmentée par rapport à la résolution optique,
**caractérisé en ce que**
e) la détection du rayonnement de luminescence effectuée lors de l'étape c) ou la génération des données d'image effectuée lors de l'étape d) comprend une amplification non linéaire (S4, S5), de préférence d'intensités plus élevées du rayonnement de luminescence acquis afin d'affiner la résolution spatiale au-dessus de la résolution optique et les étapes a) - e) sont exécutées plusieurs fois afin de générer une image globale de l'échantillon, dans lequel des images individuelles sont respectivement générées, dans lequel des données d'image obtenues après l'étape e) sont respectivement superposées aux images individuelles avec des données d'image provenant d'exécutions précédentes afin d'obtenir l'image globale de manière à produire (S6) l'image globale après la dernière exécution.

2. Procédé selon la revendication 1, **caractérisé en ce que**, lors de l'étape c), le rayonnement de luminescence est intégré de manière résolue spatialement et **en ce que**, lors de l'étape e), le résultat de l'intégration est amplifié de manière non linéaire.

3. Procédé selon l'une quelconque des revendications précédentes, **caractérisé en ce qu'**une courbe caractéristique d'amplification de l'amplification non linéaire est réglable.

4. Procédé selon l'une quelconque des revendications précédentes, **caractérisé en ce que** l'amplification non linéaire comprend une suppression d'intensités se situant en dessous d'une valeur de seuil.

5. Procédé selon l'une quelconque des revendications 1-4, **caractérisé en ce que** les molécules de marquage peuvent être désactivées afin qu'elles ne puissent plus être excitées pour délivrer un rayonnement de luminescence, et **en ce qu'**avant chaque autre exécution, l'ensemble des molécules de marquage (1) sont désactivées.

6. Procédé selon la revendication 5, **caractérisé en ce que**, pendant l'exécution, l'image globale obtenue est affichée en tant qu'image intermédiaire.

7. Procédé selon la revendication 6, **caractérisé en ce que** l'image intermédiaire est stockée lors de l'apparition, pendant l'exécution, d'un signal, par exemple d'un signal d'interruption fourni en entrée par un utilisateur, et **en ce que** les exécutions sont reprises afin de générer une nouvelle image globale.

8. Procédé selon la revendication 7, **caractérisé en ce que** l'intensité de l'induction du signal de basculement et/ou de l'excitation des molécules activées (1) est modifiée entre les exécutions afin de rendre maximale l'importance de la quantité partielle.

9. Dispositif (12) destiné à la microscopie par fluorescence à haute résolution spatiale d'un échantillon qui est marqué par des molécules de marquage (1), lesquelles peuvent être activées avec un signal de basculement afin qu'elles puissent être alors excitées pour délivrer un rayonnement de luminescence déterminé, dans lequel le dispositif comporte :
- des moyens destinés à induire le signal de basculement sur l'échantillon de manière à ce que seules des quantités partielles de molécules de marquage (1) présentes dans l'échantillon soient activées,
dans lequel l'échantillon contient des zones partielles dans lesquelles des molécules de marquage activées présentent une distance par rapport aux molécules de marquage (1) activées qui leur sont immédiatement voisine, qui est supérieure ou égale à une résolution optique d'une détection du rayonnement de luminescence,
- des moyens (13) destinés à exciter les molécules activées pour délivrer un rayonnement de luminescence,
- un dispositif détecteur (5, 6) qui acquiert le rayonnement de luminescence avec la résolution optique et délivre un signal de détection résolu spatialement,
- un dispositif générateur de données d'image qui génère des données d'image à partir du signal de détection, lesquelles données d'image indiquent la position géométrique des molécules de marquage délivrant le rayonnement de luminescence avec une résolution spatiale augmentée par rapport à la résolution optique,
**caractérisé en ce que**
- il est prévu un amplificateur non linéaire (7) qui amplifie le rayonnement de luminescence acquis ou le signal de détection de manière non linéaire, de préférence d'intensités plus élevées, afin d'augmenter la résolution spatiale au-dessus de la résolution optique,
- dans lequel le dispositif générateur de données d'mage est conçu pour générer des images individuelles et pour superposer les images individuelles à des données d'image provenant d'exécutions précédentes afin d'obtenir une image globale de manière à produire l'image globale après une dernière exécution.

10. Dispositif (12) selon la revendication 9, **caractérisé en ce que** le dispositif de détection (5, 6) intègre de manière résolue spatialement le rayonnement de luminescence et **en ce que** l'amplificateur (7) amplifie le résultat de l'intégration de manière non linéaire.

11. Dispositif (12) selon l'une quelconque des revendications 9 ou 10, **caractérisé en ce que** l'amplificateur non linéaire (7) présente une caractéristique d'amplification réglable.

12. Dispositif (12) selon l'une quelconque des revendications 9 à 11, **caractérisé en ce que** l'amplificateur effectue une suppression d'intensités se situant en dessous d'une valeur de seuil.

13. Dispositif (12) selon l'une quelconque des revendications 9 à 12, **caractérisé par** un appareil de commande (9) qui commande le fonctionnement des moyens destinés à induire le signal de basculement, des moyens (13) destinés à exciter les molécules activées, de dispositifs détecteurs (5, 6) et du dispositif générateur de données d'image ainsi que de l'amplificateur et peut ainsi provoquer une mise en fonctionnement selon l'une quelconque des revendications précédentes.

14. Dispositif (12) selon la revendication 13, conçu pour mettre en oeuvre le procédé selon l'une quelconque des revendications 6, 7 ou 8, **caractérisé par** un dispositif d'affichage (10) destiné à afficher l'image intermédiaire.

15. Dispositif (14) selon l'une quelconque des revendications 9 à 14, **caractérisé par** un amplificateur optique ou électro-optique non linéaire, notamment un intensificateur (23), disposé en amont du détecteur (5, 6) .
